# EUROPÄISCHE PATENTSCHRIFT

(11) **EP 2 463 471 B1**
(45) Veröffentlichungstag und Bekanntmachung des Hinweises auf die Patenterteilung: **06.03.2019**
(21) Anmeldenummer: 11008882.0
(22) Anmeldetag: 08.11.2011
(51) Int. Cl.: E06B 3/54, B32B 17/10

(54) **Verfahren zur Verbindung von Verbundglasscheiben**
Method for connecting wall sections
Procédé de raccordement d'éléments muraux

(30) Priorität: 07.12.2010 AT 20222010
(43) Veröffentlichungstag der Anmeldung: 13.06.2012
(73) Patentinhaber: JOSKO Fenster und Türen GmbH, 4794 Kopfing (AT)
(72) Erfinder: Scheuringer, Johann, 4722 Peuerbach (AT); Reibe, Thomas, 94127 Neuburg am Inn (DE); Brückl, Gerhard, 4753 Taiskirchen (AT)
(74) Vertreter: Peham, Alois

(56) Entgegenhaltungen:
- FR-A1- 2 649 441
- GB-A- 2 216 566
- US-A- 2 763 911

## Beschreibung

Die Erfindung betrifft ein Verfahren zur Verbindung von Verbundglasscheiben an ihren Stirnseiten.

An die Verbindung von Wandteilen wird hohe Ansprüche gestellt. Sie muss witterungs- und alterungsbeständig sein, und den entsprechenden Sicherheits- und Festigkeitsanforderungen genügen. Darüber hinaus soll auch die Montage vor Ort einfach und rasch möglich sein.

Aus der DE 10 2004 006 327 A1 ist eine Glaswand bekannt, bei der als Abstandhalter senkrecht verlaufende Glasschwerter zwischen den Glasscheiben angeordnet und gegenüber diesen abgedichtet sind.

Die DE 100 59 849 A1 beschreibt eine Anordnung zur Befestigung von Isolierglasscheiben in fensterlosen Fassaden,die im wesentlichen aus einem Träger mit zwei Schenkeln besteht, von denen der eine Schenkel mit der Innenseite der äußeren Scheibe der Isolierglasscheibe verbunden wird, während der andere Schenkel rechtwinklig zur Scheibenebene absteht und zur Verbindung mit einem Rahmen beziehungsweise anderen Tragelementen dient.

FR 2 649 441 A und GB 2 216 566 A zeigen auch eine Verbindung von Verbundglasscheiben an ihren Stirnseiten und das diesbezügliche Verfahren.

Der Erfindung liegt die Aufgabe zugrunde, den bekannten Stand der Technik weiterzuentwickeln.

Diese Aufgabe wird erfindungsgemäß durch das Verfahren des Anspruches 1 gelöst.

Die zu verbindenden Verbundglasscheiben sind bereits im Werk mit den T-förmigen Profilleisten versehen. Vor Ort auf der Baustelle ist dann auf einfache Weise die Endmontage möglich. Damit können witterungsbedingte Probleme wie beispielsweise verzögertes Aushärten eines Klebers bei tiefen Temperaturen oder Schäden an der Verbindungsstelle durch Schlagregen vermieden werden.

Die durch das Verfahren erzeugte Verbindung genügt überdies höchsten Festigkeitsanforderungen und ästhetischen Ansprüchen.

Vorteilhaft ist es, wenn eine T-förmige Abdeckleiste vorgesehen ist, deren Fuß von einer zweiten Wandseite in den zwischen den Stirnseiten angeordneten Verbindungspalt zwischen den Verbundglasscheiben ragt und mit den jeweils an der Stirnseite anliegenden ersten Schenkeln der T-förmigen Profilleisten verbunden ist. Mit dieser Abdeckleiste wird die Witterungsbeständigkeit der Verbindung erhöht. Darüber hinaus können unterschiedliche optische Wirkungen realisiert werden. Die insbesondere dann, wenn die T-förmige Abdeckleiste an Ihrem Rücken eine Nut zur Aufnahme einer Attrappendichtung aufweist.

Nach einem Ausführungsbeispiel, welches keinen Teil der Erfindung bildet, ist aber auch die Verbindung von Wandteilen mit unterschiedlichen Funktionalitäten vorteilhaft möglich. Dabei kann es sich beispielsweise um Wandteile handeln, die Fenster oder Türen umfassen, um Solarpanele oder Wandteile für besondere optische Effekte etc.

Zur weiteren Erhöhung der Festigkeit der Verbindung kann es vorteilhaft sein, wenn der dem an der Stirnseite der Verbundglasscheibe anliegende Schenkel gegenüberliegende zweite Schenkel der T-förmigen Profilleiste eine offene Kammer aufweist, die mit einem Verstärkungselement versehen ist. Mit diesem Verstärkungselement können auch große Belastungen der verbundenen Wandelemente, beispielsweise aufgrund der Gebäudegeometrie, oder aufgrund der zu erwartenden Windlasten und der Größe der Verbundglasscheiben abgefangen werden.

Als Material für die T-förmige Profilleiste und die T-förmige Halteleiste ist Aluminium vorteilhaft.

Eine weitere Verbesserung der Festigkeitseigenschaften wird dadurch erzielt, dass die zweiten Schenkel der T-förmigen Profilleisten durch eine Halteleiste zusammengehalten sind, welche mit Fortsätzen in Nuten an der Stirnseite der zweiten Schenkel eingreifen.

Die Erfindung kann in vorteilhafter Weise auch für die Verbindung mehrerer Verbundglasscheiben miteinander verwendet werden. Die Zahl dieser zu verbindenden Verbundglasscheiben ist dabei nicht begrenzt.

Die Erfindung wird anhand zweier Figuren näher erläutert.

Es zeigen beispielhaft:
Fig. 1 die Einzelteile einer Vorrichtung vor ihrem Zusammenbau und
Fig.2 die Vorrichtung nach ihrer Fertigstellung.

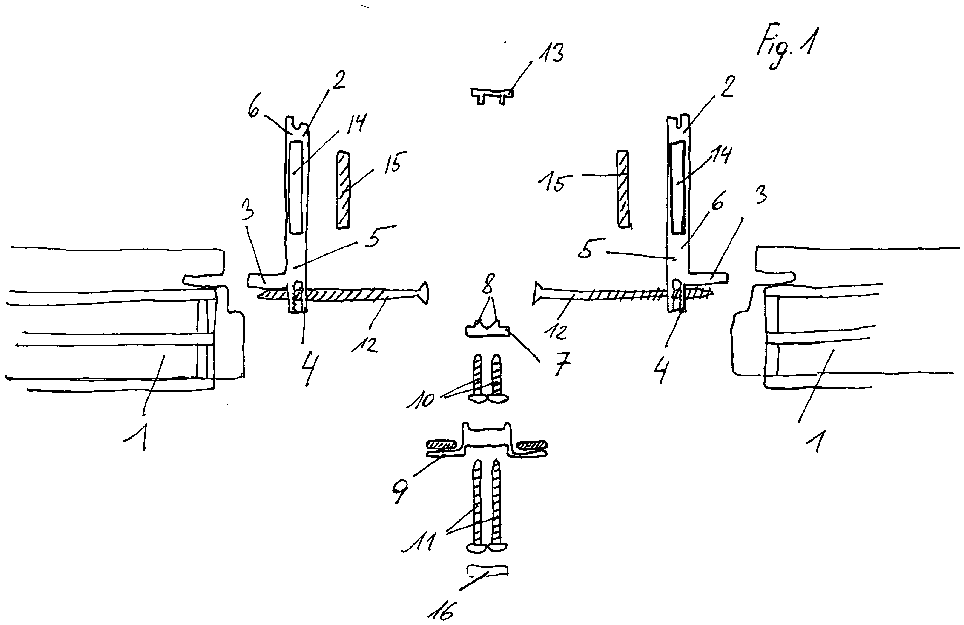

Die Darstellung nach Fig. 1 umfasst zu verbindende Verbundglasscheiben 1, im vorliegenden Beispiel handelt es sich um Verbundglasscheiben. Die Vorrichtung zur Verbindung der Wandteile an ihren Stirnseiten umfasst an Einzelteilen für jede Verbundglasscheibe 1 eine T-förmige Profilleiste 2 mit einem Verstärkungselement 15, ein Klemmelement 7, eine Abdeckleiste 9 mit Attrappendichtung 16, sowie eine Halteleiste 13 und die zur Befestigung der einzelnen Elemente verwendeten Schrauben 10, 11, 12.

Im Rahmen einer Vorfertigung im Werk werden die Verbundglasscheiben 1 mit einem dreiseitigen Holz-Alu-Verbundsystemrahmen versehen. An der zu verbindenden Stirnseite wird eine T-förmige Profilleiste 2 angebracht. Dazu wird ein erster Schenkel 4 der T-förmigen Profilleiste2 an die Stirnseite der Verbundglasscheibe geklebt und überdies mit Schrauben an dem dreiseitigen Rahmen befestigt. Der mit einer Dichtung versehene Fuß 3 der T-förmigen Profilleiste 2 liegt daraufhin an einer ersten Wandseite des Wandteiles an.

Beim Ausführungsbeispiel werden nur jeweils zwei Verbundglasscheiben 1 miteinander verbunden. Erfindungsgemäß können aber auch mehr als zwei Verbundglasscheiben 1 beispielsweise für eine "Endloswand" miteinander verbunden werden. In diesem Fall sind die für die Verbindungen vorgesehenen Stirnseiten entsprechend vorzubereiten.

Durch die Vorab-Montage der T-förmigen Profilleiste 2 werden einerseits Aufwand und Dauer der Montage vor Ort reduziert, dadurch dass die Vorab-Montage unter kontrollierten Bedingungen erfolgt können auch erhöhte Qualitätsanforderungen erfüllt werden.

Beim Transport der so vorbereiteten Wandteile auf die Baustelle bieten die vormontierten T-förmigen Profilleisten 2 überdies einen wirkungsvollen Kantenschutz und verringern so das Risiko einer Beschädigung der Stirnseite der Verbundglasscheiben.

Bei der Endmontage vor Ort werden die Verbundglasscheiben 1 ausgerichtet, sodass bei jeder Verbindungsstelle die Rücken 5 zweier T-förmiger Profilleisten 2 aneinander anliegen. In den Verbindungsspalt werden in vorgegebenen Abständen Klemmelemente 7 eingebracht und mittels Schrauben 10 so mit den jeweils an der Stirnseite anliegenden ersten Schenkeln 4 der T-förmigen Profilleisten 2 verbunden, dass jeweils einer der keilförmigen Klemmfortsätze 8 in eine entsprechende Ausnehmung - beim Ausführungsbeispiel handelt es sich um Schraubkanäle - des ersten Schenkels 4 ragt und die beiden T-förmigen Profilleisten 2 zusammengepresst und damit fixiert werden.

Anstelle von Klemmelementen 7 wäre auch eine über die Länge des Verbindungsspaltes verlaufende Klemmleiste denkbar.

Diese form- und kraftschlüssige Verbindung kann durch Einsatz eines Klebers verstärkt werden, mit dem die beiden T-förmigen Profilleisten 2 an ihren Rücken 5 verklebt werden.

Als weitere Verstärkung werden die zweiten Schenkel 6 der T-förmigen Profilleisten 2 durch eine Halteleiste 13 zusammengehalten, welche mit Fortsätzen in Nuten an der Stirnseite der zweiten Schenkel 6 eingreift.

Durch diese Halteleiste 13 werden die zweiten Schenkel 6 auch zu einer optischen Einheit nach Art einer Lisene vereint.

Der an der gegenüberliegenden Wandseite offene Verbindungsspalt wird mit einer T-förmigen Abdeckleiste 9 verschlossen, die ebenfalls mittels Schrauben 11 mit den T-förmigen Profilleisten 2 verbunden ist.

Mit dieser Abdeckleiste wird das Eindringen von Wasser in den Verbindungsspalt verhindert und damit das Risiko von Frost-/Schlagregenschäden minimiert. Darüber hinaus können unterschiedliche optische Wirkungen realisiert werden. Dies insbesondere dann, wenn die T-förmige Abdeckleiste an Ihrem Rücken eine Nut zur Aufnahme einer Attrappendichtung aufweist. Damit kann auch der Eindruck eines "Nurglasstoß"-Verbindung erzielt werden.

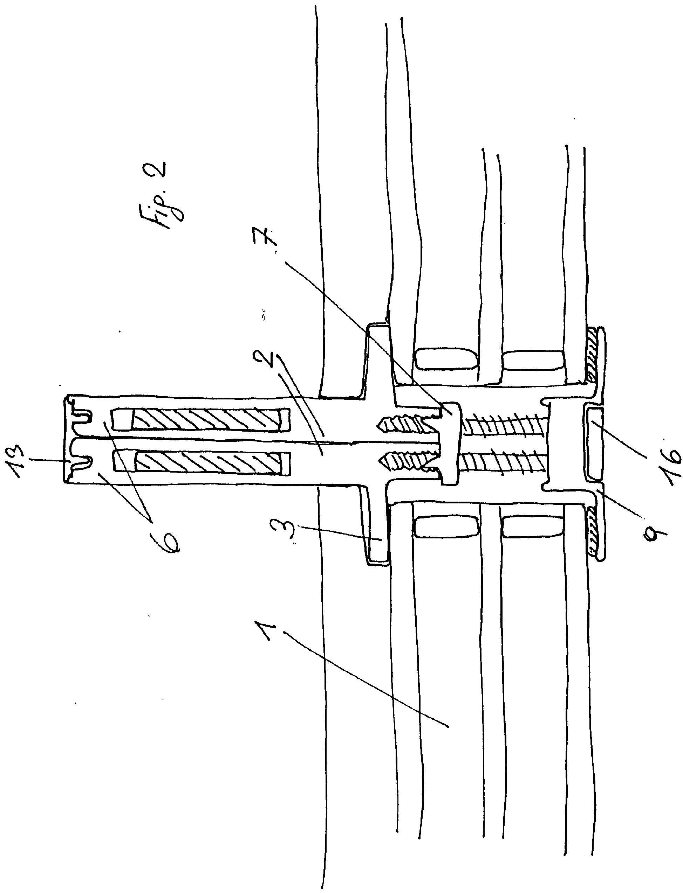

Die fertig montierte Vorrichtung wird in Fig. 2 in einer schematischen Schnittdarstellung gezeigt.

### Bezugszeichenliste

- 1: Verbundglasscheiben
- 2: T-förmige Profilleiste
- 3: Fuß
- 4: erster Schenkel
- 5: Rücken
- 6: zweiter Schenkel
- 7: Klemmelement
- 8: Klemmfortsätze
- 9: Abdeckleiste
- 10, 11, 12: Schrauben
- 13: Halteleiste
- 14: Kammer
- 15: Verstärkungselement
- 16: Attrappendichtung

## Patentansprüche

1. Verfahren zur Verbindung von Verbundglasscheiben an ihren Stirnseiten, wobei jede Verbundglasscheibe (1) im Rahmen einer Vorab-Montage an den zu verbindenden Stirnseiten mit einer im Querschnitt annähernd T-förmigen Profilleiste (2) versehen wird, deren Fuß (3) an einer ersten Wandseite der Verbundglasscheibe und deren Rücken (5) mit einem ersten Schenkel (4) an der Stirnseite anliegt, wobei bei der Endmontage vor Ort die Verbundglasscheiben (1) so ausgerichtet werden, dass die Rücken (5) zweier T-förmiger Profilleisten (2)aneinander anliegen, wobei weiterhin in den zwischen den Stirnseiten angeordneten Verbindungspalt ein Klemmelement (7) mit Klemmfortsätzen (8) eingebracht wird, das mit den jeweils an der Stirnseite anliegenden ersten Schenkeln (4) der T-förmigen Profilleisten (2) verbunden ist.

2. Verfahren nach Anspruch 1, **dadurch gekennzeichnet, dass** der an einer Seite offene Verbindungsspalt mit einer T-förmigen Abdeckleiste (9) verschlossen wird, deren Fuß von einer zweiten Wandseite in den zwischen den Stirnseiten angeordneten Verbindungspalt zwischen den Verbundglasscheiben ragt und mit den jeweils an der Stirnseite anliegenden ersten Schenkeln(4) der T-förmigen Profilleisten(2) verbunden ist.

3. Verfahren nach einem der Ansprüche 1 bis 2, **dadurch gekennzeichnet, dass** der dem an der Stirnseite der Verbundglasscheibe anliegende Schenkel gegenüberliegende zweite Schenkel (6) der T-förmigen Profilleiste (2) eine offene Kammer (14) aufweist, die mit einem Verstärkungselement (15) versehen ist.

4. Verfahren nach einem der Ansprüche 1 bis 3, **dadurch gekennzeichnet, dass** die T-förmige Profilleiste (2) und die T-förmige Abdeckleiste (9) aus Aluminium bestehen.

5. Verfahren nach einem der Ansprüche 1 bis 4, **dadurch gekennzeichnet, dass** die zweiten Schenkel (6) der T-förmigen Profilleisten (2) durch eine Halteleiste (13)zusammengehalten werden, welche mit Fortsätzen in Nuten an der Stirnseite der zweiten Schenkel (6) eingreifen.

6. Verfahren nach Anspruch 2, **dadurch gekennzeichnet, dass** die T-förmige Abdeckleiste(9) an Ihrem Rücken eine Nut zur Aufnahme einer Attrappendichtung(16) aufweist.

7. Verfahren nach einem der Ansprüche 1 bis 6, **dadurch gekennzeichnet, dass** zwei oder mehr Verbundglasscheiben (1) miteinander verbunden werden.

## Claims

1. Method for connecting laminated glass panes at their end faces, wherein each laminated glass pane (1) is provided, in the course of a preassembly, with a cross-sectionally approximately T-shaped profile strip (2) on the end faces to be connected, the foot (3) of which strip bears on a first wall side of the laminated glass pane and the back (5) of which strip bears by a first leg (4) on the end face, wherein, during the final assembly in situ, the laminated glass panes (1) are oriented in such a way that the backs (5) of two T-shaped profile strips (2) bear on one another, wherein, furthermore, a clamping element (7) having clamping extensions (8) is introduced into the connecting gap arranged between the end faces and is connected to the first legs (4) of the T-shaped profile strips (2) that each bear on the end face.

2. Method according to Claim 1, **characterized in that** the connecting gap, which is open on one side, is closed by a T-shaped covering strip (9) whose foot projects from a second wall side into the connecting gap, which is arranged between the end faces, between the laminated glass panes and is connected to the first legs (4) of the T-shaped profile strips (2) that each bear on the end face.

3. Method according to either of Claims 1 and 2, **characterized in that** the second leg (6) of the T-shaped profile strip (2) that is opposite to the leg bearing on the end face of the laminated glass pane has an open chamber (14) which is provided with a reinforcing element (15) .

4. Method according to one of Claims 1 to 3, **characterized in that** the T-shaped profile strip (2) and the T-shaped covering strip (9) consist of aluminium.

5. Method according to one of Claims 1 to 4, **characterized in that** the second legs (6) of the T-shaped profile strips (2) are held together by a holding strip (13) which engages by extensions in grooves on the end face of the second legs (6).

6. Method according to Claim 2, **characterized in that** the T-shaped covering strip (9) has on its back a groove for receiving a dummy seal (16).

7. Method according to one of Claims 1 to 6, **characterized in that** two or more laminated glass panes (1) are connected to one another.

## Revendications

1. Procédé de raccordement de vitres feuilletées au niveau de leurs côtés frontaux, chaque vitre feuilletée (1) étant, dans le cadre d'un prémontage, dotée d'une baguette profilée (2) approximativement en forme de T en section transversale au niveau des côtés frontaux à raccorder, baguette profilée dont la base (3) s'appuie contre un premier côté de paroi de la vitre feuilletée et dont le dos (5) s'appuie par une première branche (4) contre le côté frontal, les vitres feuilletées (1) étant, lors du montage final sur place, orientées de telle sorte que les dos (5) de deux baguettes profilées (2) en forme de T s'appuient l'un contre l'autre, un élément de serrage (7) doté de saillies de serrage (8) étant en outre introduit dans l'interstice de raccordement disposé entre les côtés frontaux, lequel élément de serrage est raccordé aux premières branches (4), s'appuyant respectivement contre le côté frontal, des baguettes profilées (2) en forme de T.

2. Procédé selon la revendication 1, **caractérisé en ce que** l'interstice de raccordement ouvert sur un côté est fermé à l'aide d'une baguette de recouvrement (9) en forme de T, dont la base fait saillie, à partir d'un deuxième côté de paroi, dans l'interstice de raccordement disposé entre les côtés frontaux entre les vitres feuilletées et est reliée aux premières branches (4), s'appuyant respectivement contre le côté frontal, des baguettes profilées (2) en forme de T.

3. Procédé selon la revendication 1 ou 2, **caractérisé en ce que** la deuxième branche (6), opposée à la branche s'appuyant contre le côté frontal de la vitre feuilletée, de la baguette profilée (2) en forme de T comprend une chambre ouverte (14) qui est dotée d'un élément de renforcement (15).

4. Procédé selon l'une quelconque des revendications 1 à 3, **caractérisé en ce que** la baguette profilée (2) en forme de T et la baguette de recouvrement (9) en forme de T sont constituées d'aluminium.

5. Procédé selon l'une quelconque des revendications 1 à 4, **caractérisé en ce que** les deuxièmes branches (6) des baguettes profilées (2) en forme de T sont maintenues ensemble par une baguette de retenue (13), laquelle vient en prise, par des saillies, dans des rainures sur le côté frontal des deuxièmes branches (6).

6. Procédé selon la revendication 2, **caractérisé en ce que** la baguette de recouvrement (9) en forme de T comprend, sur son dos, une rainure servant à recevoir un joint d'étanchéité factice (16).

7. Procédé selon l'une quelconque des revendications 1 à 6, **caractérisé en ce que** deux ou plus de deux vitres feuilletées (1) sont raccordées les unes aux autres.
